# DEMANDE DE BREVET EUROPEEN

(11) **EP 0 985 344 A1**
(43) Date de publication de la demande: **15.03.2000**
(21) Numéro de dépôt: 98460037.9
(22) Date de dépôt: 10.09.1998
(51) Int. Cl.: A01K 97/22, B62B 1/12

(54) **Dispositif de transport de matérial de pêcheur à la ligne, se transformant en poste de pêche**

(71) Demandeur: Leblanc, Jean-Claude, 56360 Rieux (FR); Leblanc, Robert, 22250 Broons (FR)
(72) Inventeur: Tougeron, Claude, 44300 Nantes (FR)

(57) **Abrégé**

Dispositif pour transporter le matériel de pêcheur à la ligne et ayant les caractéristiques de se transformer en poste de pêche équipé.

L'invention se présente sous forme d'un chariot, à deux roues 6 et béquilles 7 de stabilisation, sur lequel se pose le coffre de pêcheur déjà existant 25. Un dossier 12 et un bras de transport 17 + 18 télescopiques, escamotable à l'arrière du coffre 25 pour limiter le volume total. En position pêche, le dossier 12 permet d'utiliser le coffre 25 comme une chaise. Le bras 17 + 18 est décalé horizontalement et devient support de canne à pèche. Le plateau 14 servant de support à l'étui de cannes 26 est déplacé et devient mini-servant à portée de main du pêcheur. Un manchon 23 sert à maintenir une canne en position verticales. Un anneau 24 permet de maintenir un pied de parasol.

## Description

La présente invention concerne un dispositif servant au transport des ustensiles utiles à un pêcheur à la ligne et comportant diverses combinaisons permettant l'aménagement d'un poste de pêche.

Traditionnellement, l'équipement du pêcheur à la ligne se compose d'un étui ou sont rangées les cannes à pêche, d'un coffre contenant les accessoires et servant de tabouret en cours de pêche. Cet équipement est porté à l'épaule à l'aide de bretelles.

Le dispositif, selon la présente invention, se compose d'un châssis sur lequel sera posé le coffre qui conservera sa fonction de siège. Pour permettre la pose des coffres déjà existants et pallier aux différentes largeurs de ceux-ci selon leur origine, ce châssis est constitué de deux éléments latéraux reliés par des tiges d'assemblage filetées; le montage du châssis peut ainsi s'effectuer à la largeur précise correspondant à celle du coffre qui y sera installé.

Le châssis est rigidifié par deux haubans fixés sur deux des tiges d'assemblage précitées.

Le châssis est équipé de deux roues servant à rouler l'ensemble sur le lieu de pêche, et étant utilisées en tant que point d'appui arrière pendant l'action pêche. Le pont d'appui avant du dispositif est assuré par deux béquilles réglables, indépendantes l'une de l'autre et retenues par un verrou à ressort, ce qui permet de stabiliser l'ensemble du dispositif en position horizontale quelle que soit l'importance de l'éventuelle déclivité du sol.

Le châssis comporte deux montants qui reçoivent chacun un support coulissant verticalement et se bloquant en position haute à l'aide d'un verrou à ressort. Entre ces deux supports coulissants, vient se positionner un dossier également tenu par deux tiges d'assemblage filetées. L'ensemble, en position basse ou repliée s'escamote à une hauteur ne dépassant pas celle du coffre, ceci afin de conserver un volume minimum d'encombrement pour le transport, de cet ensemble, dans un coffre de voiture. En position haute ou déployée, le dossier peut être utilisé par le pêcheur assis sur le coffre. Le coffre-tabouret devient une chaise.

Les deux supports coulissants précités comportent également un dispositif de glissière latérale dans laquelle coulisse un manchon pouvant se décaler à droite comme à gauche du châssis, ou escamoter au centre pour réduire l'encombrement. Sur ce manchon, vient s'adapter un bras. Ce bras, constitué de deux éléments télescopiques, ne dépasse pas la hauteur du dossier et du coffre dans sa position repliée. Ce bras, déployé, en position verticale sert de poignée de transport pour rouler le dispositif. En position pêche , le bras est positionné à l'horizontale et peut être utilisé comme support de cannes à pêche grâce à un crochet et à un vé prévu pour cette utilisation. Le bras pourra être disposé à droite ou à gauche du dispositif, au gré et à la convenance du pêcheur.

La partie du châssis, située entre les roues et l'arrière des montants du dossier, comporte un bac amovible qui aura deux utilités : Il permet la pose verticale de l'étui de cannes à pêche pour le transport sur le lieu de pêche, l'étui étant retenu en position par des Sandows accrochés aux tiges d'assemblage du dossier ; Sur le lieu de pêche, le bac est placé sur le bras et peut être utilisé comme une mini-servante à portée de main du pêcheur assis.

Un anneau prévu sur une glissière supportant le dossier permet de glisser un pied de parasol et de maintenir celui-ci.

Un fourreau fixé à l'avant droit ou gauche du châssis permet de maintenir une canne à pêche en position verticale pour toute opération sur le bas de ligne.

La position des pieds avant du coffre, située à l'avant de la tige d'assemblage, maintient le coffre à sa place, sans autre fixation. Le coffre ne peut pas glisser que ce soit en basculant l'ensemble dans les secousses ou lorsqu'il sert de siège au pêcheur.

Les dessins annexés illustrent l'invention.
La figure 1 représente l'ensemble du dispositif à nu.
La figure 2 représente l'ensemble complet du dispositif sur lequel sont adaptés le coffre et l'étui de cannes.
La figure 3 représente , en coupe, la largeur à obtenir lors du montage du châssis, selon le coffre qui y sera posé.
La figure 4 représente le profil partiel du dispositif permettant de constater l'encombrement de l'ensemble replié pour le transport dans un véhicule.
La figure 5 représente le profil partiel du dispositif déplié, prêt pour un déplacement vers le lieu de pêche.
La figure 6 représente, en oblique partiel, la position des divers accessoires installés en poste de pêche.

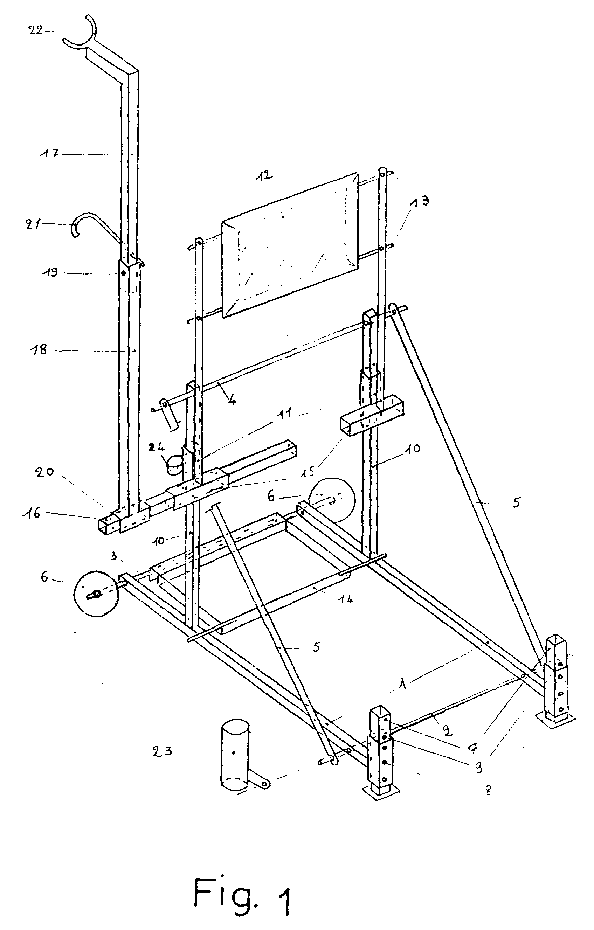

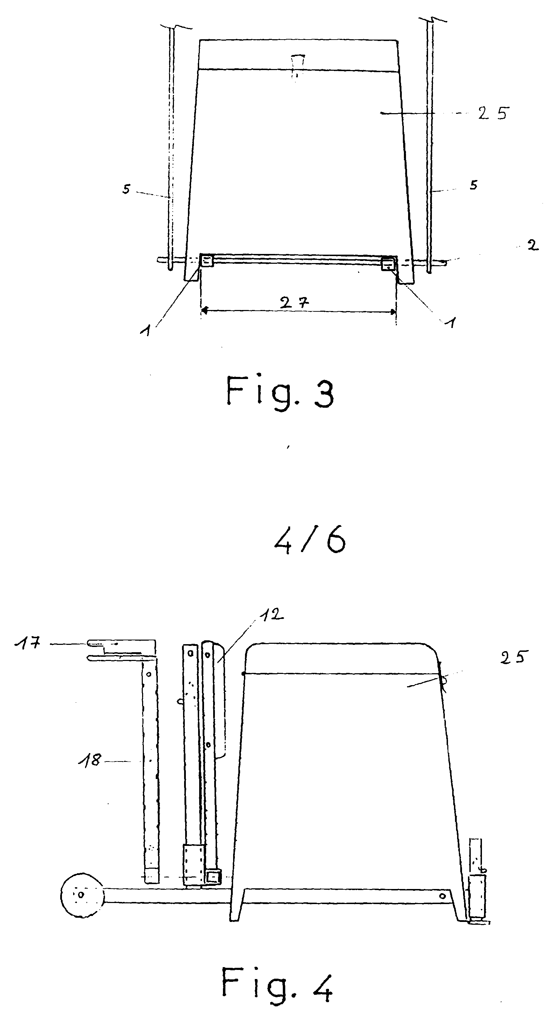

En référence à la figure 1, le dispositif comporte un châssis composé de deux éléments identiques 1 reliés en trois points par des tiges d'assemblage filetées 2, 3, 4. Des écrous, non représentés sur les figures, assurent les réglages et blocages des éléments 1 du châssis selon la largeur du coffre qui doit y être adapté. (précisé fig.3)

Deux haubans 5 fixés aux extrémités des tiges d'assemblage 2 et 4, assurent une totale rigidité de l'ensemble.

Le châssis comporte deux roues 6 permettant de rouler l'ensemble par basculement partiel. Ces roues 6 servent, également, de point d'appui arrière lors de l'utilisation de l'ensemble en poste de pêche. Les points d'appui avant étant assurés par deux béquilles 7 réglables en hauteur, indépendamment l'une de l'autre, par les orifices 8 et les verrous à ressort 9. Ces béquilles 7 permettant de stabiliser l'ensemble en position horizontale quelle que soit l'éventuelle déclivité du sol.

Les montants 10 des châssis servent de glissières verticales et sur celle-ci sont adaptés deux supports 11 portant à leur partie supérieure un dossier 12 maintenu par deux tiges d'assemblage filetées 13.

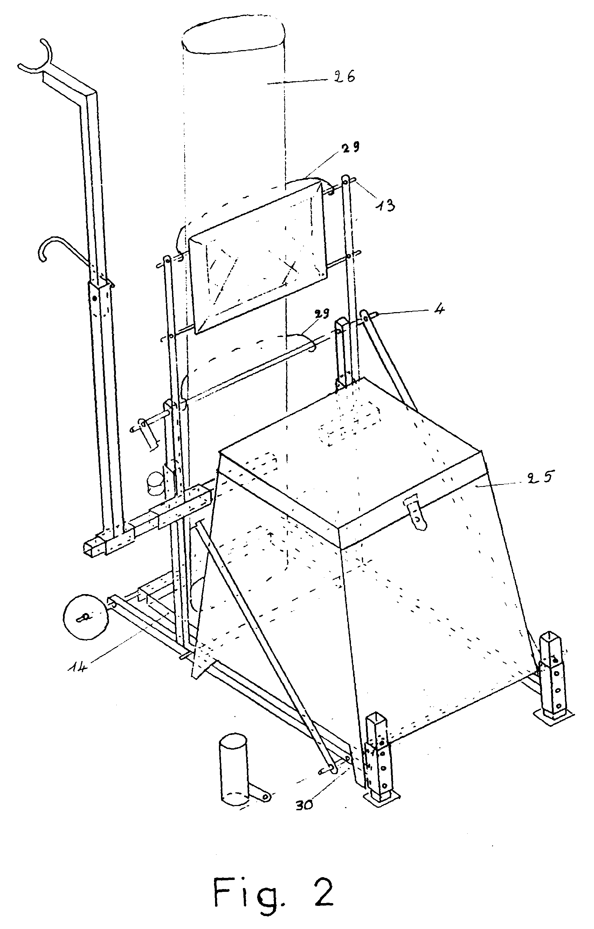

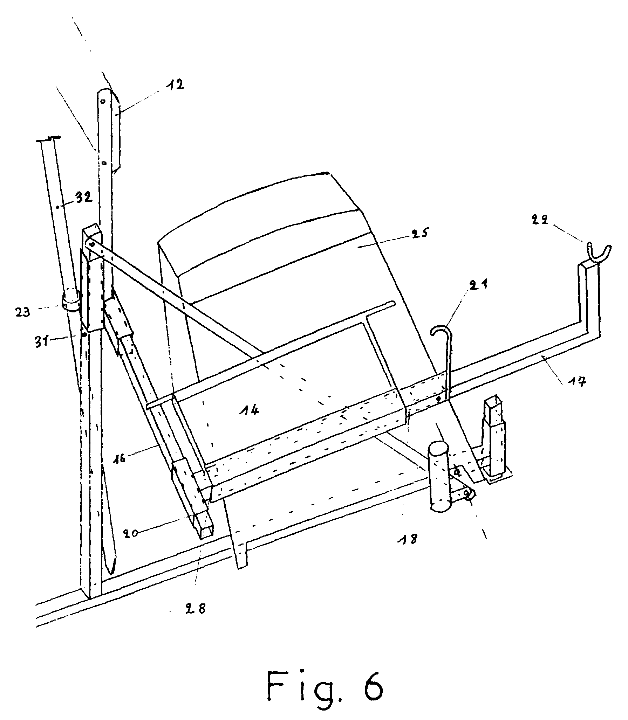

Un bac 14 amovible permet de poser verticalement l'étui de cannes à pèche (décrit fig.2). Autre fonction du bac (décrit fig. 6).

Des glissières femelles 15 prévues sur les supports reçoivent un manchon 16 coulissant vers la droite ou la gauche. Sur ce manchon 16 vient s'adapter un bras composé de deux éléments 17 et 18.

Ce bras 17 + 18 est télescopique pour s'escamoter au niveau du dossier 12, toujours dans un souci de réduction du volume. Le bras 17 + 18 est maintenu en position déployé par le verrou à ressort 19. L'élément 18 du bras comporte un emboîtement 20 de forme carrée, ce qui lui donne la possibilité d'être décalé d'un quart de tour vers le coffre (décrit fig. 6). Ainsi décalé, le bras devient support de canne à pêche en fonction pêche. La canne étant maintenue en position par le crochet 21 et prenant appui sur le vé 22. Le coulissement latéral du manchon 16 permet de disposer le bras 17 + 18 indifféremment à droite ou à gauche du poste de pêche, au gré et à la convenance du pêcheur.

Un fourreau 23 fixé, soit à droite ou à gauche, à l'extrémité de la tige d'assemblage 2 avec le hauban 5 permet de maintenir la canne à pêche en position verticale pour toute opération sur le bas de ligne.

Un anneau 24 fixé sur un support coulissant 11 a été prévu pour pouvoir y glisser le pied d'un parasol.

En référence à la figure 2, le dispositif y est présenté équipé du coffre de pêche 25 ainsi que l'étui 26 de cannes à pêche. Le coffre 25 est simplement posé sur le châssis, qui a été monté à la dimension convenable, sans aucune autre fixation ; Le repère 30 précise la position des pieds avant du coffre situé à l'avant de la tige d'assemblage 2 ; ainsi, le coffre est maintenu à sa place et ne peut glisser soit en transport, (position oblique du châssis), dans les secousses, soit en tant que siège du pêcheur. L'étui de cannes à pêche 26 est posé verticalement dans le bac 14 et maintenu par des Sandows accrochés aux tiges d'assemblage 4 et 13. Sandows 29.

En référence à la figure 3, le coffre 25 est présenté sur la coupe du châssis 1 et 1. Le repère 27 correspond à la largeur à laquelle doit être monté le châssis 1 + 1 à l'aide des tiges d'assemblage 2, 3, 4, fig. 1.

En référence à la figure 4, le profil partiel du dispositif équipé du coffre 25 présente la position d'effacement du dossier 12 et du bras 17 + 18, donnant à l'ensemble un volume minimum pour faciliter le transport dans un coffre de voiture. Le bras 17 + 18 est présenté en décalage latéral, pour faciliter la lecture de la figure.

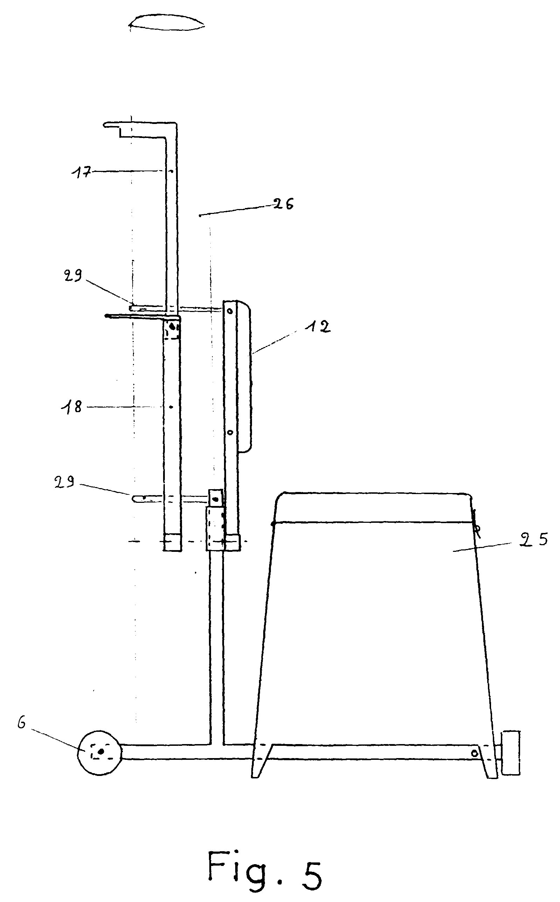

En référence à la figure 5, le profil partiel montre le dispositif équipé du coffre 25, de l'étui de cannes à pêche 26, du dossier 12 déployé et du bras 17 + 18 déployé, (Le bras 17 + 18 a été décalé sur la figure pour en faciliter la lecture). Cette figure correspond à la position des divers éléments lors du déplacement autonome vers le lieu de pêche. L'ensemble devenant facile à faire rouler par simple basculement en donnant appui sur les roues 6.

En référence à la figure 6, cette vue partielle et oblique présente le bras 17 + 18 qui a subi une rotation d'un quart de tour sur le manchon 16 grâce à l'emboîtement 20 de l'élément 18 du bras. Le bras 17 + 18 est ainsi passé de sa position initiale de bras de transport en position du support de canne en action pêche. La canne sera maintenue horizontalement en étant posée sur le vé 22 et accrochée sous le crochet 21.

Le bac 14 a été déplacé de sa position de transport (Fig. 1 et 2) et posé sur l'élément 18 du bras, maintenu à cette place par un emboîtement 28 ou U renversé. Il prend aussi appui sur le manchon 16. Le dossier 12 est bloqué en position déployée par le verrou à ressort 31.

Le pied d'un parasol 32 a été introduit dans l'anneau 23.

Cette figure présente le dispositif adapté en poste de pêche.

En complément des références à la figure 1, le mode de jonction et de fixation (Tiges d'assemblage 2, 3, 4, 13) des éléments du châssis et du dossier, peuvent être remplacés par tout autre système tel que : Emboîtement, coulissement, traverses soudées ou boulonnées

## Revendications

1. Dispositif pour transport de matériel de pêcheur à la ligne caractérisé en ce qu'il comporte un châssis de largeur variable sur lequel peut s'adapter tout modèle de coffre 25, et l'étui contenant les cannes à pêche 26. Deux roues 6 permettent le déplacement et servent de point d'appui au sol en action pêche. Deux béquilles 7 réglables complètent l'appui et permettent la stabilisation du dispositif. Un dossier 12 monté sur système télescopique. Un bras, en deux éléments 17 et 18 télescopique, orientable et pouvant se positionner à droite comme à gauche, sert pour rouler le dispositif et de support de canne en position pêche. Un bac 14 supporte l'étui de cannes à pêche en déplacement, sur le lieu de pêche, ce bac 14 est déplacé pour faire office de servante à portée de main du pêcheur assis. Un fourreau 23 permet de tenir une canne à pêche en position verticale pour pouvoir effectuer tout opération sur le bas de ligne. Un anneau 23 situé à l'arrière du dispositif permet d'y faire glisser un pied de parasol et de le maintenir.

2. Dispositif selon la revendication 1 et caractérisé en ce qui concerne le châssis constitué de deux éléments identiques 1 + 1, reliés par des tiges d'assemblage filetées 2, 3 et 4, permettant un montage précis selon les dimensions du coffre 25 qui y sera installé.

3. Dispositif selon la revendication 1 et caractérisé en ce qui concerne la présence de deux béquilles 7 avant, réglables, servant à compenser les éventuelles déclivités du sol.

4. Dispositif selon la revendication 1 et caractérisé en ce qui concerne la présence d'un dossier 12 monté sur glissières 11 permettant une assise correcte du pêcheur et une réduction à un volume minimum pour le transport en véhicule.

5. Dispositif selon la revendication 1 et caractérisé en ce qui concerne le bras de transport constitué de deux éléments 17 + 18 télescopique, pour réduction de volume.

6. Dispositif selon la revendication 1 et caractérisé en ce qui concerne le bras 17 + 18. L'élément 18 comporte un emboîtement 20 qui permet une rotation d'un quart de tour transformant le bras 17 + 18 en support de canne en action pêche, la canne sera posée sur le vé 22 et tenue horizontalement par le crochet 21.

7. Dispositif selon la revendication 1 caractérisé en ce qui concerne le manchon 16 coulissant vers la droite ou la gauche, permettant l'adaptation du bras 17 + 18 au gré et à la convenance du pêcheur.

8. Dispositif selon la revendication 1 caractérisé en ce qui concerne la présence d'un bac 14 servant d'appui au transport de l'étui de cannes à pêche, et qui , en action pêche, se positionne sur l'élément de bras 18, devenant mini-servante à portée de main du pêcheur assis.

9. Dispositif selon la revendication 1 caractérisé en ce qui concerne la présence d'un fourreau 23 adapté à l'extrémité droite ou gauche de la tige d'assemblage 2 ayant pour fonction de maintenir une canne à pêche en position verticale, libérant les mains du pêcheur, pour toute opération sur le bas de la ligne.

10. Dispositif selon la revendication 1 caractérisé en ce qui concerne la présence d'un anneau 24 situé à l'arrière du dossier 12 permettant d'y introduire et de maintenir droit, un pied de parasol.
